# EUROPÄISCHE PATENTSCHRIFT

(11) **EP 0 958 551 B1**
(45) Veröffentlichungstag und Bekanntmachung des Hinweises auf die Patenterteilung: **01.08.2001**
(21) Anmeldenummer: 96905706.6
(22) Anmeldetag: 11.03.1996
(51) Int. Cl.: G07C 3/00

(54) **VERFAHREN ZUR SPEICHERUNG VON PROZESS-SIGNALEN EINER TECHNISCHEN ANLAGE**
METHOD OF STORING PROCESS SIGNALS FROM AN INDUSTRIAL INSTALLATION
PROCEDE DE MEMORISATION DES SIGNAUX DE PROCESSUS D'UNE INSTALLATION INDUSTRIELLE

(30) Priorität: 23.03.1995 DE 19510539
(43) Veröffentlichungstag der Anmeldung: 24.11.1999
(73) Patentinhaber: SIEMENS AKTIENGESELLSCHAFT, 80333 München (DE)
(72) Erfinder: BOCHTLER, Jürgen, D-91074 Herzogenaurach (DE); BÖGGE, Michael, D-91080 Spardorf (DE); KRÜGER, Rudi, D-91341 Röttenbach (DE)
(86) Internationale Anmeldenummer: DE9600429
(87) Internationale Veröffentlichungsnummer: WO9629682

(56) Entgegenhaltungen:
- EP-A- 0 298 888
- GB-A- 2 018 481
- PATENT ABSTRACTS OF JAPAN vol. 015, no. 230 (P-1214), 12.Juni 1991 & JP,A,03 071019 (HITACHI LTD), 26.März 1991,
- ELEKTRONIK, Nr. 9, 1977, MÜNCHEN, DE, Seiten 61-63, XP002007424 H.P. GLOCKMANN ET AL: "DIN für Magnetband-PCM-Syteme" in der Anmeldung erwähnt

## Beschreibung

Die Erfindung bezieht sich auf ein Verfahren zur Speicherung von Prozeßsignalen einer technischen Anlage, bei dem, insbesondere in einem sogenannten Ringspeicher, eine Vielzahl von verschiedenartigen Prozeßsignaltypen zugeordneten Prozeßsignalen in chronologischer Reihenfolge hinterlegt werden. Unter technischer Anlage wird hierbei insbesondere eine großtechnische Anlage, z.B. eine Kraftwerksanlage, verstanden. Ein derartiges Verfahren ist beispielsweise bekannt aus dem Aufsatz "DIN für Magnetband-PCM-Systeme", H. P. Glockmann und L. Drebinger, Elektronik (1977), Heft 9, S. 61 - 63, oder aus der EP-A-0 298 888. Aus der GB-A-2 018 481 ist ein Verfahren zur Speicherung von Prozeßsignalen bekannt, bei dem jedes eintreffende Prozeßsignal mittels eines jeweils inkrementierten Zählerstands und gegebenenfalls zusätzlich mittels eines Uhrzeitsignals charakterisiert wird. Aus Patent Abstracts of Japan, Band 015, Nr. 230 (P-1214) vom 21.06.1991 (=Zusammenfassung der JP-A-03/071019) ist ein Prozeßsignal-Recorder bekannt, bei dem neben jedem Prozeßsignal die Signalklassifikation der sogenannte Prozeßsignaltyp, und eine Klassifikation des zum Prozeßsignaltyp gehörigen Abtastzyklus gespeichert werden.

In einer Kraftwerksanlage sollen Überwachungs- und Informationssysteme die aktuellen Betriebszustände der Anlage erkennbar machen und Abweichungen von einem Sollzustand melden. Dazu ist eine umfangreiche Erfassung und Speicherung von die Betriebszustände aller Anlagenteile charakterisierenden Meßwerten erforderlich. Mit zunehmender Energie- und/oder Arbeitsausnutzung derartiger Anlagen und mit zunehmender Steigerung ihres Sicherheitsstandards wachsen auch die Anforderungen an das Leitsystem hinsichtlich der Verarbeitung und Speicherung großer Datenmengen.

Die Speicherung von zeitlichen Prozeßabläufen erfolgt üblicherweise durch chronologische Hinterlegung von aus Meßwerten und/oder Anlagenzuständen abgeleiteten Prozeßsignalen. Die unterschiedliche Meßwerte und/oder Anlagenzustände repräsentierenden Prozeßsignale sind dabei verschiedenen Prozeßsignaltypen zugeordnet.

Aus den gespeicherten Daten können auch Abbilder des in der Anlage abgelaufenen Prozesses erstellt werden, die komplexe Zustände der Anlage zu bestimmten Zeitpunkten beschreiben. Dazu werden die zu einem bestimmten Zeitpunkt hinterlegten Prozeßsignale, die den Anlagenprozeß zu dem entsprechenden Zeitpunkt beschreiben, zu einem Statusabbild zusammengefaßt, so daß während des Betriebs der Anlage eine Vielzahl derartiger Statusabbilder erstellt werden. Diese Statusabbilder können dann beispielsweise zu Diagnosezwecken herangezogen werden.

Zur Speicherung von zeitlichen Verläufen von Prozeßsignalen auf Prozeßrechnern werden üblicherweise Umlaufpuffer oder Ringspeicher eingesetzt. Ein Ringspeicher kann dabei eine große Anzahl von Prozeßsignalen enthalten und einen zeitlichen Bereich von mehreren Tagen abdecken. Um auf ein Prozeßsignal oder ein Statusabbild zurückzugreifen, muß von der aktuellen Zeitposition ausgehend der Ringspeicher üblicherweise sequentiell durchsucht werden. Allerdings wird zum Auffinden insbesondere lange zurückliegender Prozeßsignale oder Statusabbilder sehr viel Zeit benötigt. Eine von der Erstellung eines Statusabbildes abhängige Diagnose kann somit in nachteiliger Weise bis zu einigen Stunden dauern.

Der Erfindung liegt daher die Aufgabe zugrunde, ein Verfahren zur Speicherung von Prozeßsignalen einer technischen Anlage anzugeben, das ein schnelles Auffinden von zeitlich geordneten oder aus diesen zusammengesetzten Prozeßsignalen oder Statusabbildern ermöglicht.

Diese Aufgabe wird erfindungsgemäß gelöst, indem jedem in chronologischer Reihenfolge hinterlegten Prozeßsignal eine die Position des innerhalb der chronologischen Reihenfolge vorhergehenden und dem gleichen Prozeßsignaltyp zugeordneten Prozeßsignals charakterisierende Kennung zugeordnet wird. Alternativ oder zusätzlich wird jedem aus einer Anzahl von Prozeßsignalen zusammengesetzten Statusabbild eine die Position des innerhalb der chronologischen Reihenfolge vorhergehenden Statusabbildes charakterisierende Kennung zugeordnet.

Die Erfindung geht dabei von der Erkenntnis aus, daß bei einem sequentiellen Lesen eines Ringspeichers eine Vielzahl von irrelevanten Informationen analysiert werden muß. Durch eine Verkettung von Prozeßsignalen gleichen Prozeßsignaltyps kann die Analyse irrelevanter Prozeßsignale umgangen werden, so daß das Auffinden des gesuchten Prozeßsignals beschleunigt wird.

Um die Zugehörigkeit von Prozeßsignalen zu einem Statusabbild eindeutig zu kennzeichnen, werden dem Statusabbild vorteilhafterweise ein Startzeichen und ein Endezeichen zugeordnet.

Zweckmäßigerweise weist jedes Prozeßsignal eines der Prozeßsignaltypen eine Information über den Zeitpunkt seiner Hinterlegung auf. Durch ein derartiges Setzen von Zeitmarkierungen wird ermöglicht, hinterlegte Prozeßsignale und somit die zugrundeliegenden Meßwerte dem jeweiligen Zeitpunkt der Meßwerterfassung zuzuordnen.

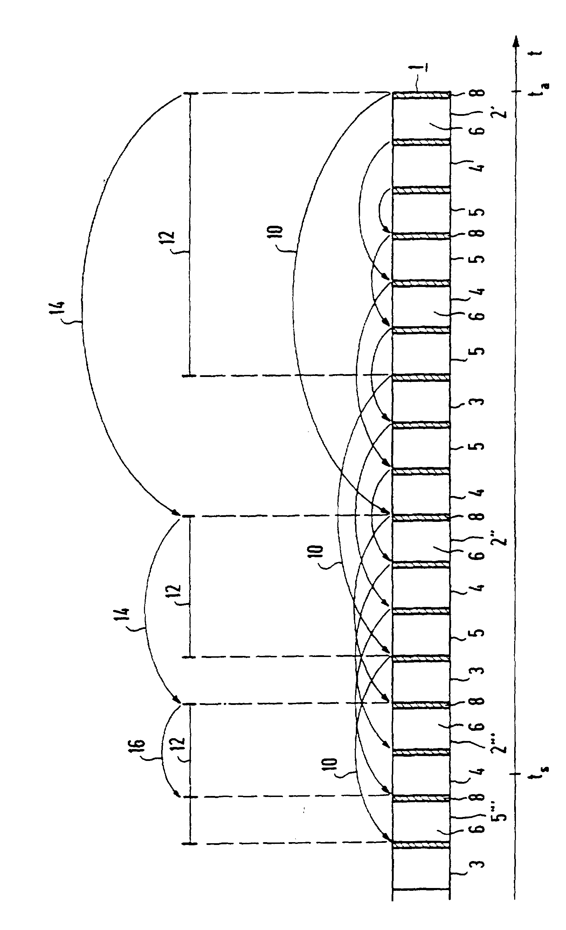

Ein Ausführungsbeispiel der Erfindung wird anhand einer Zeichnung näher erläutert. Darin zeigt die Figur im Ausschnitt ein Belegungsschema von in einem Ringspeicher hinterlegten Prozeßsignalen.

Im Belegungsschema 1 des Ringspeichers ist eine Vielzahl von Prozeßsignalen 2, 3, 4, 5 - wie durch den Zeitpfeil t angedeutet - in chronologischer Reihenfolge abgespeichert. Die Prozeßsignale 2, 3, 4, 5 sind dabei verschiedenartigen Prozeßsignaltypen zugeordnet, wobei jedes Prozeßsignal 2 einem gemeinsamen Prozeßsignaltyp zugeordnet ist. Analoges gilt für die Prozeßsignale 3, 4 und 5. Jeder Prozeßsignaltyp ist dabei einem Meßwert, wie zum Beispiel der Eintrittstemperatur einer Turbine, einem Zustand eines Anlagenteils, wie zum Beispiel Pumpe AN/AUS, oder einem Organisationselement innerhalb einer Datenverarbeitung zugeordnet.

Jedes Prozeßsignal 2 bis 5 umfaßt ein Datenelement 6, das die numerische Größe eines Meßwerts bzw. die Statusangabe des Zustands angibt. Jedes Prozeßsignal 2 bis 5 umfaßt außerdem eine Kennung 8 zur Charakterisierung der Position des vorhergehenden und dem gleichen Prozeßsignaltyp zugeordneten Prozeßsignals 2, 3, 4 bzw. 5 innerhalb der chronologischen Reihenfolge der Prozeßsignale 2 bis 5 im Ringspeicher. Dies ist durch die Pfeile 10 angedeutet. So verweist beispielsweise die Kennung 8 des zum Zeitpunkt tₐ aktuellen Prozeßsignals 2' auf die Position des vorhergehenden und zum gleichen Prozeßsignaltyp gehörenden Prozeßsignals 2". Die Kennung 8 dieses Prozeßsignals 2" verweist wiederum auf die Position des diesem vorangehenden und zum gleichen Prozeßsignaltyp gehörenden Prozeßsignals 2" ' usw.

Das Belegungsschema 1 umfaßt darüber hinaus eine Anzahl von zu verschiedenen Zeitpunkten t aufgenommenen Statusabbildern 12. Jedes Statusabbild 12 ist dabei aus einer Anzahl von Prozeßsignalen 2 bis 5 zusammengesetzt. Jedem Statusabbild 12 ist ein Prozeßsignal 2 als Startzeichen sowie ein Prozeßsignal 3 als Endezeichen zugeordnet.

Die Kennung 8 des als Startzeichen dienenden Prozeßsignals 2' charakterisiert die Position des als Startzeichen des vorhergehenden Statusabbilds 12 dienenden Prozeßsignals 2", so daß zum Auffinden eines Statusabbilds 12 jeweils lediglich das als Startzeichen dienende Prozeßsignal 2 gelesen werden muß. Ausgehend von diesem kann dann zum vorhergehenden Statusabbild 12 gesprungen werden. Somit ist ein sequentielles Lesen aller vom Statusabbild 12 umfaßten Prozeßsignale 2 bis 5 nicht mehr erforderlich.
Das Datenelement 6 jedes Prozeßsignals 2 enthält eine Information über den Zeitpunkt t seiner Hinterlegung und erfüllt somit die Funktion einer Zeitmarke innerhalb der chronologischen Reihenfolge der Prozeßsignale 2 bis 5. Zur Erstellung eines Prozeßabbilds auf der Grundlage eines Statusabbilds 12 zu einem vorgewählten Zeitpunkt t wird dabei wie folgt verfahren: Zunächst wird das als Startzeichen dienende Prozeßsignal 2 des aktuellen Statusabbilds 12 eingelesen und dessen Datenelement 6 ausgewertet. Dieses Datenelement 6 enthält eine Information über den aktuellen Zeitpunkt tₐ, die mit dem gesuchten Zeitpunkt tₛ verglichen wird. Falls beide innerhalb vorgebbarer Grenzen nicht übereinstimmen, wird - wie durch die Pfeile 14 angedeutet - anhand der Kennung 8 des Prozeßsignals 2' zur Position des dem vorhergehenden Statusabbild 12 als Startzeichen dienenden Prozeßsignals 2" gesprungen. Dieses Prozeßsignal 2 wird wiederum eingelesen, so daß die in dessen Datenelement 6 enthaltene Information über den Zeitpunkt t mit dem gesuchten Zeitpunkt tₛ verglichen werden kann. Analog wird so lange zum jeweils vorhergehenden Statusabbild 12 gesprungen, bis die Information über den Zeitpunkt t des Datenelements 6 innerhalb vorgebbarer Grenzen mit dem gesuchten Zeitpunkt tₛ übereinstimmt. Somit wird schnell und effektiv das zum gesuchten Zeitpunkt tₛ im Ringspeicher hinterlegte Statusabbild 12 aufgefunden.

Zum Auffinden eines einzelnen der Prozeßsignale 2 bis 5 zu einem Suchzeitpunkt tₛ wird in analoger Weise verfahren. Zunächst wird wiederum anhand der im Datenelement 6 enthaltenen Information über einen Zeitpunkt t des als Startzeichen dienenden Prozeßsignals 2 eines Statusabbilds 12 dasjenige Statusabbild 12 ermittelt, welches zum gesuchten Zeitpunkt t_{S} im Ringspeicher hinterlegt wurde. Ausgehend vom als Startzeichen dienenden Prozeßsignal 2 dieses Statusabbilds 12 werden dann die diesem Prozeßsignal 2 vorangehenden Prozeßsignale 2 bis 5 sequentiell eingelesen und analysiert. Dies erfolgt so lange, bis ein Prozeßsignal 2 bis 5 vom gewünschten Prozeßsignaltyp aufgefunden wird.

Alternativ zu dieser sequentiellen Weise zum Auffinden eines Prozeßsignals 2 bis 5 kann - ausgehend vom als Startzeichen dienenden Prozeßsignal 2 des zum gesuchten Zeitpunkt tₛ hinterlegten Statusabbilds 12 - das gewunschte Prozeßsignal 2 bis 5 auch vektoriell eingelesen werden. Dazu weist dann das Datenelement 6 des als Startzeichen dienenden Prozeßsignals 2" ' des zum gesuchten Zeitpunkt tₛ hinterlegten Statusabbilds 12 eine Kennung 16 auf, die für die Position des vorangehenden Prozeßsignals 2 bis 5 vom gewünschten Prozeßsignaltyp charakteristisch ist. Dies ist für das Auffinden des Prozeßsignals 5"' durch den Pfeil 18 angedeutet.

Durch eine derartige Hinterlegung von Prozeßsignalen 2 bis 5, bei der Prozeßsignale 2 bis 5 gleichen Prozeßsignaltyps durch ihre Kennung 8 miteinander verkettet sind, wird das Auffinden einzelner Prozeßsignale 2 bis 5, oder das Auffinden von aus mehreren Prozeßsignalen 2 bis 5 zusammengesetzten Statusabbildern 12, vereinfacht und beschleunigt. Ein sequentielles Lesen des gesamten Inhalts des Ringspeichers ist somit nicht erforderlich.

## Patentansprüche

1. Verfahren zur Speicherung von Prozeßsignalen einer technischen Anlage, bei dem eine Vielzahl von verschiedenartigen Prozeßsignaltypen zugeordneten Prozeßsignalen (2 bis 5) in chronologischer Reihenfolge hinterlegt werden, wobei jedem Prozeßsignal (2 bis 5) eine die Position des innerhalb der chronologischen Reihenfolge vorhergehenden und dem gleichen Prozeßsignaltyp zugeordneten Prozeßsignals (2 bis 5) charakterisierende Kennung (8) zugeordnet wird.

2. Verfahren zur Speicherung von Prozeßsignalen einer technischen Anlage, bei dem eine Vielzahl von verschiedenartigen Prozeßsignaltypen zugeordnete Prozeßsignale (2 bis 5) in chronologischer Reihenfolge hinterlegt werden, wobei einem aus einer Mehrzahl von Prozeßsignalen (2 bis 5) zusammengesetzten Statusabbild (12) eine die Position des innerhalb der chronologischen Reihenfolge vorhergehenden Statusabbilds (12) charakterisierende Kennung (8) zugeordnet wird.

3. Verfahren nach Anspruch 2,
**dadurch gekennzeichnet**, daß jedem Statusabbild (12) ein Startzeichen und ein Endezeichen zugeordnet wird.

4. Verfahren nach einem der Ansprüche 1 bis 3,
**dadurch gekennzeichnet**, daß jedes Prozeßsignal (2) eines der Prozeßsignaltypen eine Information über den Zeitpunkt seiner Hinterlegung aufweist.

## Claims

1. Process for storing process signals of a technical installation in which a number of process signals (2 to 5) assigned to various process signal types are stored in chronological order, wherein an identification code (8) characterising the position of the preceding process signal (2 to 5) in the chronological sequence and assigned to the same signal type is assigned to each process signal (2 to 5).

2. Process for storing process signals of a technical installation in which a number of process signals (2 to 5) assigned to various process signal types are stored in chronological order, wherein an identification code (8) characterising the position of the preceding status display (12) in the chronological sequence is assigned to a status display (12) composed of a number of process signals (2 to 5).

3. Process according to Claim 2,
**characterised in that** a start character and a stop character is assigned to each status display (12).

4. Process according to one of Claims 1 to 3,
**characterised in that** each process signal (2) of one of the process signal types has information about the time of its storage.

## Revendications

1. Procédé pour la mémorisation de signaux de processus d'une installation technique, dans lequel on mémorise dans l'ordre chronologique une pluralité de signaux de processus (2 à 5) associés à différents types de signaux de processus, un identificateur (8) qui caractérise la position du signal de processus (2 à 5) précédent dans l'ordre chronologique et associé au même type de signal de processus étant associé à chaque signal de processus (2 à 5).

2. Procédé pour la mémorisation de signaux de processus d'une installation technique, dans lequel on mémorise dans l'ordre chronologique une pluralité de signaux de processus (2 à 5) associés à différents types de signaux de processus, un identificateur (8) qui caractérise la position de l'image d'état (12) précédente dans l'ordre chronologique étant associé à une image d'état (12) composée de plusieurs signaux de processus (2 à 5).

3. Procédé selon la revendication 2, caractérisé par le fait qu'on associe à chaque image d'état (12) un signe de début et un signe de fin.

4. Procédé selon l'une des revendications 1 à 3, caractérisé par le fait que chaque signal de processus (2) d'un des types de signaux de processus comporte une information sur l'instant de sa mémorisation.
